# EUROPEAN PATENT APPLICATION

(11) **EP 2 148 493 A1**
(43) Date of publication of application: **27.01.2010**
(21) Application number: 08104870.4
(22) Date of filing: 24.07.2008
(51) Int. Cl.: H04L 29/14, H04L 29/12, H04L 29/08

(54) **P2P overlay network for administrative services in a digital network**

(71) Applicant: Nokia Siemens Networks OY, 02610 Espoo (FI)
(72) Inventor: Bahls, Thomas, 17489, Greifswald (DE); Duchow, Daniel, 17033, Neubrandenburg (DE)
(74) Representative: Bruglachner, Thomas E.

(57) **Abstract**

The invention relates to a method to store and retrieve transient data or administrative data for network services in a digital network (DN) with multiple access nodes (AN) wherein an overlay network (0) in Peer-to-Peer-Technology (P2P) is set up between access nodes (AN) and that the transient data or administrative data is stored multiply in the access nodes (AN) and retrieved by a single access node when needed for a network service.

## Description

The invention relates to a method to store and retrieve transient data or administrative data for network services in a digital network with multiple access nodes.

In the network nodes of a digital network the transient data is held today in volatile memory and is lost after the reboot of the network node. This implies that the connections across the network have to be re-established by the subscribers although their network addresses are still valid, due to long lease times by DHCP. The transient data could be stored by the access node into non-volatile memory (Flash), but due to the limited write capabilities of flash memory, this memory would wear out in an inacceptable time.

Furthermore, the name resolutions in digital networks, for instance by the Domain Name Service DNS, have the problem of a lot of requests and by that a huge network and data base load, which prevent a central infrastructure per network operator. Today a small local server farm in regional network nodes handles the regional requests. Address resolutions that can not be handled regionally are directed to a central DNS server.

Also the logging and statistics of traffic data are stored today in the local memory of the network node or through central log servers. The central log servers store the data in a file system but are not able to deliver the data back to the network node on an automated basis.

Such a re-delivering to the requesting network node could be an approach to resolve the problem with the transient data.

Statistic data of the network is usually retrieved offline out of the logged data at a central site.

It is the object of the invention to disclose a method to store and retrieve transient and administrative data of a network without using non-volatile memory in the local access nodes while still maintaining immediate availability or ability to instantaneously retrieve them.

This object is achieved by the features of claim 1.

An access node, designed to execute a method according to claim 1 is also claimed.

Favourable embodiments of the invention are described in the dependent claims.

The Peer-to-Peer-technology P2P is relative new and is mainly used to share files, such as videos or music, between subscribers of a digital network.

The Peer-to-Peer-technology is characterized by three main aspects:
- intermeshed communication principle instead of star like communications
- data storage and distribution in the network
- load sharing in the network.

Peer-to-Peer-technologies are only established from subscribers to subscribers (end-to-end) and as services which are transparent to the network nodes.

The usage of the technology by the network nodes can solve the mentioned problems in the prior art and the network services can be implemented more reliable and cost effective. This technology is usable in most digital access nodes, such as Digital Subscriber Line Access Multiplexers DSLAM and Optical Line Terminals OLT in Passive Optical Networks PON.

Multiple access nodes, which up to now transmit P2P-traffic transparently, can now be active nodes in a P2P-network. For this purpose a separate logical overlay network is established between multiple access nodes. No additional equipment is necessary in the access nodes. There can also be multiple separate overlay networks between the same access nodes for different applications or services. The type of P2P-protocol used on the overlay network is dependent on the application or the network service.

The P2P-network can be implemented in different technologies. It can be based on a centralized server as the first generation of P2P-technology. A more advanced technology uses multiple decentralized servers. In this technology Kademlia protocols are used to configure the network. The address information for the P2P-network is held in Distributed Hash Tables DHT. This allows for a fast access to the nodes.

In a P2P-network the transient data can be stored "into the network", not onto a normal non-volatile memory. With the P2P-technology the data can be stored very fast and retrieved in the same way, especially when fast volatile memory (RAM) is used. The P2P-protocols allow a faster data exchange than traditional file transfer protocols as FTP or syslog. The transient data can be retrieved fast from the network.

In a routing service a lot of transient data has to be available in the access node. This includes session data of digital connections as lease times of addresses.

After a reboot of the access node the data can be stored in a volatile memory RAM without using there a non-volatile memory for the transient data.

It is essential that the data is stored redundant in multiple locations. The transient data can be reconstructed from different locations, so that the failure of a network node can be tolerated. The whole memory capacity of all involved nodes is used efficiently. When the transient data is stored interleaved in different access nodes, the data can be sececured by standard error correction techniques.

It is possible to run a network service as address resolution DNS without specialized name servers in the network. The address resolution is decentralized and done on the local access node itself. By this, the load is reduced as only requests from the local subscribers are handled. The IP address of the access node can be used by the subscribers as the address of the DNS-server by using the appropriate port numbers.

The access nodes retrieve the necessary naming information from the P2P overlay network, which also acts as the decentralized storage for the DNS name information. The access nodes use a local cache memory for handling the local requests very fast.

Naming information, which is not available in the DNS overlay network, is requested from the existing centralized DNS servers. In this way the DNS service is compatible with the existing DNS structure. The update of the naming information in the overlay network can be done asynchronously with the existing centralized DNS servers.

For applications as logging, statistics or reporting the P2P overlay network can be used as a storage, which can be accessed via P2P in a fast and deterministic way. All involved network nodes write their administrative data immediately into this storage. The administrative data is now not only local available but also distributed in the network. The application for statistics or reporting may run on one or more specialized servers, which request the data out of the overlay network and process them asynchronously. The data can also be deleted asynchronously in the overlay network when they are no longer needed.

This approach can be seen as a distributed computing resource and results in a smaller number of dedicated servers. The distribution of the data in the overlay network and the intermeshed communication of the network nodes leads to a wider scope of the application, the network as a whole and not only the local network node. The application can be run without centralized servers.

In every of the described services the network nodes do not work self-contained nor do they act as clients to central servers. They communicate intermeshed and build an own logical domain with P2P-technology.

This leads to less computing load and a potentially leesened need for non-volatile memory or, at least, less amount of installed volatile memory in the network node, while maintaining the same function or service. The overlay network is more failure safe and permits a direct load balancing between the network nodes. In this way, the applications and services can be implemented more efficient.

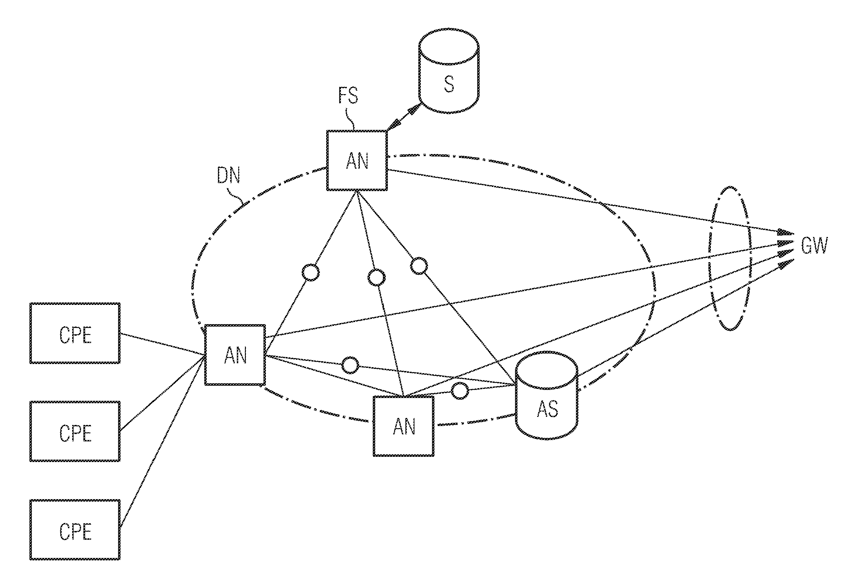

Figure 1 shows the structure of a digital network with an overlay network between access nodes.

The digital network DN comprises several access nodes AN. In the figure, only to one of the accessnodes AN the customer premises equipment CPE of the subscribers is shown. The access nodes are intermeshed by an overlay network with P2P-lines, indicated by O. To a special access node a storage device S is shown, which can hold permanent data of the network and work as a filing server FS. An spplication server AS is connected to the overlay network, which runs applications in the network and can retrieve data out of all P2P connected nodes. Such an application can be an reporting service.

Every node in the digital network DN also has connections to a gateway GW to a superior backbone network. This connections can also carry connections to central servers, such as DNS-servers.

### References

- AN: Access Node
- AS: Application Server
- CPE: Customer Premises equipment
- DHCP: Dynamic Host Control Protocol
- DHT: Distributed Hash Table
- DN: Digital Network
- DNS: Domain Name System
- DSLAM: Digital Line Access Multiplexer
- FS: Filing Server
- GW: Gateway to a superior Network
- O: Overlay P2P-connection
- OLT: Optical Line Termination
- P2P: Peer-to-Peer
- PON: Passive Optical Network
- RAM: Random Access Memory
- S: Strorage device

## Claims

1. A method to store and retrieve transient data or administrative data for network services in a digital network (DN) with multiple access nodes (AN) **characterized in that** an overlay network (O) in Peer-to-Peer-Technology (P2P) is set up between access nodes (AN) and that the transient data or administrative data is stored multiply in the access nodes (AN) and retrieved by a single access node when needed for a network service.

2. A method according to claim 1, **characterized in that** the transient or administrative data is stored in a volatile memory (RAM).

3. A method according to claim 2, **characterized in that** the data is stored in an interleaved and redundant manner in multiple access nodes and secured by error correction techniques.

4. A method according to claim 1, **characterized in that** the network service is a routing service.

5. A method according to claim 1, **characterized in that** the network service is a Domain Name Service DNS.

6. A method according to claim 5, **characterized in that** the Domain Name Service is retrieving the address resolutions from the overlay network (O) and only when the questioned address cannot be resolved, requests are sent to centralized DNS servers.

7. A method according to claim 1, **characterized in that** the network service is a logging or a statistics service.

8. A method according to claim 7, **characterized in that** a specialized access node works as a file server, which retrieves the logging data to be filed asynchrounously from the overlay network.

9. A method according to claim 7, **characterized in that** one or more specialized access node work as reporting servers, which process the data available in the overlay network (O) asynchrounously.

10. A method according to claim 1, **characterized in that** the Peer-to-Peer-Technology is based on a central server.

11. A method according to claim 1, **characterized in that** the Peer-to-Peer-Technology is based on multiple decentralized servers.

12. A method according to claim 1, **characterized in that** the Peer-to-Peer-Technology uses Kademlia protocols.

13. A method according to claim 11, **characterized in that** the Peer-to-Peer-Technology uses distributed hash tables (DHT).

14. A method according to claim 1, **characterized in that** an access node is part of multiple different overlay networks.

15. Access node in a digital Network designed to execute a method according to one of the above claims.
